(19) Europäisches Patentamt
European Patent Office
Office européen des brevets

(11) Publication number: **0 172 337**
**B1**

# (12) EUROPEAN PATENT SPECIFICATION

(45) Date of publication of patent specification: **17.01.90**

(51) Int. Cl.[5]: **C 08 L 75/04,** C 08 K 3/36, C 08 K 5/54, C 08 G 18/10, C 09 D 5/04

(21) Application number: **85107186.0**

(22) Date of filing: **11.06.85**

## (54) Thixotropic polyurethane resin compositions.

(30) Priority: **12.06.84 JP 121099/84**

(43) Date of publication of application:
**26.02.86 Bulletin 86/09**

(45) Publication of the grant of the patent:
**17.01.90 Bulletin 90/03**

(84) Designated Contracting States:
**AT BE CH DE FR GB IT LI NL SE**

(56) References cited:
**EP-A-0 129 858**
**DD-A- 138 777**

**PATENT ABSTRACTS OF JAPAN, vol. 8, no. 122, 8th June 1984, page (C-227) (1559); & JP-A-59-33358 (MITSUI NITSUSOU URETHANE) 23-02-1984**

**The file contains technical information submitted after the application was filed and not included in this specification**

(73) Proprietor: **Takeda Chemical Industries, Ltd.**
**27, Doshomachi 2-chome Higashi-ku**
**Osaka-shi Osaka-fu (JP)**

(72) Inventor: **Higashi, Sachio**
**10-6, Senricama-Tsukigaoky**
**Suita Osaka 565 (JP)**
Inventor: **Yasuda, Kiyoshi**
**72 Fushio-cho**
**Ikeda Osaka 563 (JP)**
Inventor: **Yamamoto, Shinichiro**
**2846-3, Kaibara Kaibara-cho**
**Hikami-gun Hyogo 669-33 (JP)**

(74) Representative: **von Kreisler, Alek, Dipl.-Chem. et al**
**Deichmannhaus am Hauptbahnhof**
**D-5000 Köln 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 172 337 B1

Courier Press, Leamington Spa, England.

**Description**

This invention relates to novel thixotropic polyurethane resin compositions, which are widely applicable to various fields, such as paints, sealing materials, flooring materials, waterproofing materials, walling materials and adhesives.

When polyurethane resins are used in the fields as mentioned hereinbefore, heretofore, they are employed as a self-levelling or thixotropic resin so that they may be suited for the individual application fields. Particularly, sealing materials, walling materials, waterproofing materials, etc. which are intended to be applied on the vertical or slant surface are used as a thixotropic resin in order to prevent sagging or flowing. There have already been known several methods of producing thixotropic polyurethane resins. For example, the Japanese Patent Publication No. 41110/1970 describes thixotropic polyurethane resin compositions which consist of a polyurethane prepolymer, colloidal silica and polyoxyethylene glycol derivative. In the Japanese Patent Publication No. 7632/1972, there are disclosed thixotropic polyurethane resin compositions which comprises a urethane polymer, a large amount of fillers and a polyoxyalkylene compound. Also, the Japanese Patent Publication No. 11656/1976 illustrates thixotropic polyurethane resin compositions which comprise a block copolymer from ethylene oxide and propylene oxide, fine-powdered silica, etc. included in a polyurethane prepolymer. When these conventional thixotropic polyurethane resin compositions are mixed by a mixer, such as high-speed disper, planetary mixer and butterfly mixer, after addition of such organometallic catalysts as lead octoate and dibutyltin dilaurate and such inorganic fillers as calcium carbonate, nevertheless, they in many instances incur breakdown of thixotropy and fail to restore the original level of thixotropy.

Patents Abstracts of Japan, 8, No. 122 (08.06.1984) (C-227) (1559), which is a summary of JP—A—59-33358, discloses similar thixotropic polyurethane compositions comprising:

(1) an isocyanate group terminated urethane prepolymer,

(2) colloidal silica,

(3) a polysiloxane-polyoxyalkylene block-copolymer and, if necessary, other additives.

The molecular structure of component (3) is, however, different from the structure disclosed as component (3) in the present invention and the composition of the Japanese document is inferior in the "slump"-property measured according to JIS A—5758.

Even if a thixotropic polyurethane resin composition can once be produced by avoiding as far as possible incorporation of a component resulting in reduced thixotropy or vigorous stirring, such a composition often exhibits markedly decreased thixotropy, failing to restore the original thixotropy, when a shear stress is applied thereon during refilling into cartridges, filling into a hand-gun or pumping to a line gun. The conventional compositions involving the use of colloidal silica cannot solve such a problem, and consequently show inferior processability or workability.

Under these circumstances, the present inventors made repeatedly strenuous efforts to obtain a polyurethane resin composition which can restore thixotropy extremely rapidly even when a potent shear stress is applied before use.

The present inventors conducted exhaustive research in order to solve the problem as described hereinbefore, and as a result, found that a polyurethane resin composition which comprises a polyurethane prepolymer in the form of liquid or solution being formulated as the essential component with colloidal silica and a specific polysiloxane polyoxyalkylene polymer exhibits outstandingly excellent thixotropy.

Thus, the present invention is concerned with thixotropic polyurethane resin compositions which comprise:

(1) A polyurethane prepolymer in the form of liquid or solution,

(2) Colloidal silica, and

(3) A polysiloxane polyoxyalkylene prepolymer of the general formula:

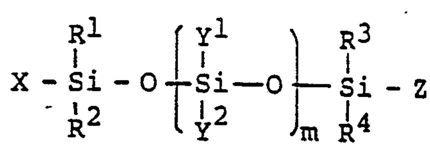

(I)

[wherein $R^1$, $R^2$, $R^3$ and $R^4$ are the same or different, and each is a methyl or phenyl group; m is an integer of 0 to 70; one of X and Z is a polyoxyalkylene containing group of the formula:

$$-(CH_2)_n-O\{(C_3H_6O)_a(C_2H_4O)_b\}-R^5 \qquad (i)$$

(wherein n is an integer of 1 to 4; a is an integer of 0 to 50; b is an integer of 10 to 100; $R^5$ is hydrogen, an alkyl group of 1 to 8 carbon atoms or an alkylcarbonyl group of 1 to 18 carbon atoms, and when a is an integer of not less than 1, the $C_3H_6O$ and $C_2H_4O$ groups may be linked to each other in arbitrary orders), and the other is methyl, phenyl or a polyoxyalkylene containing group represented by the formula (i); $Y^1$ and $Y^2$ are the same or different, and each is methyl, phenyl or a polyoxyalkylene containing group represented by

the formula (i) described hereinbefore, whereby in the case of m being not less than 2, $Y^1$ and $Y^2$ may vary per repeating unit within the scope as defined hereinbefore].

The polyurethane prepolymer, which is one of the constituents of the resin composition according to the present invention, is polymers having a relatively low molecular weight, for example, an average molecular weight in the range of about 500 to 20,000, formed by the reaction between the polyisocyanate compound and active hydrogen compound to be described hereinafter at an equivalent ratio of NCO group/active hydrogen of, preferably, 1.02:1.0 to 5.0:1, more preferably 1.1:1.0 to 3.0:1.0. Out of these polyurethane prepolymers, the essentially low-viscosity liquid ones can be used as such in the present invention, while the high-viscosity liquid ones or solid ones can be employed as a solution thereof dissolved in a suitable solvent or plasticizer.

The solvent in which the polyurethane prepolymer is dissolved to a liquid form includes, for example, esters, such as ethyl acetate, butyl acetate and amyl acetate, ketones, such as acetone, methyl ethyl ketone and methyl isobutyl ketone, aromatic hydrocarbons, such as toluene, benzene and xylene, ethers, such as tetrahydrofurane and dioxane, substituted amides, such as N,N'-dimethylformamide and N,N'-dimethylacetamide, and dimethylsulfoxide. The term "polyisocyanate compound" which constitutes a starting material for the above polyurethane prepolymer denotes compounds having not less than two NCO groups per molecule, and there may be mentioned, for example, 2,4- and 2,6-tolylene diisocyanates, m- and p-phenylene diisocyanates, 1-chlorophenylene-2,4-diisocyanate, m- and p-phenylene diisocyanates, 1-chlorophenylene-2,4-diisocyanate, 1,5-naphthalene diisocyanate, 3,3'-bistoluene-4,4'-diisocyanate, methylene-bis-phenylene-4,4'-diisocyanate, tetramethylene diisocyanate, hexamethylene diisocyanate, ω,ω'-diisocyanato-dimethylbenzene, ω,ω-diisocyanatodimethylcyclohexane, lysine diisocyanate, dicyclohexylmethane diisocyanate, tetramethylxylene diisocyanate, dimers and trimers of these isocyanates and triisocyanates formed by addition of 3 moles of diisocyanates to triols such as trimethylolpropane.

The term "active hydrogen compound" which is the other starting material for the polyurethane prepolymer means polyols and polyamines having on the average 2 to 5 active hydrogen groups per mole and an average molecular weight per active hydrogen group in the range of 30 to 3000, or mixtures thereof, and includes, for example, the following compounds.

(1) Low-molecular-weight di- or triols, such as ethylene glycol, propylene glycol, 1,4-butanediol, hexamethylene glycol, 1,4-cyclohexanediol, triisopropanolamine, trimethylolpropane and glycerol.

(2) Polyalkylene glycols, such as polyoxyethylene glycol, polyoxypropylene glycol, glycols of polyoxyethylenepolyoxypropylene copolymers and polyoxytetramethylene glycol.

(3) Polymers from alkylene oxides, such as ethylene oxide and propylene oxide, and low-molecular-weight triols, such as glycerol, trimethylolpropane and 1,2,6-hexanetriol, or low-molecular-weight tetraols, such as erythritol and pentaerythritol.

(4) Polyester polyols from low-molecular-weight polyols and low-molecular-weight polycarboxylic acids; the suitable polyol includes ethylene glycol, propylene glycol, 1,4- and 1,3-butanediols and 1,6-hexanediol, while the polycarboxylic acid includes adipic acid, succinic acid, maleic acid, phthalic acid and terephthalic acid.

(5) Ring-open polymers of cyclic esters, such as polycaprolactone and polybutyrolactone.

(6) A variety of esters and half esters from castor oil inclusive of hydrogenated castor oil and various related polyols and from ricinoleic acid and polyhydroalcohols, such as mono- or diricinoleate of mono-, di- or triethylene glycol, mono-, di- or triricinoleate of 1,2,6-hexanetriol or trimethylolpropane, and mono-, di-, tri- or tetraricinoleate of pentaerythritol or erythritol.

(7) Polyamines, such as ethylenediamine, propylenediamine, tetramethylenediamine, p-phenylenediamine, 2,4-diaminotoluene, methylenebis-4,4-diaminobenzene and 4,4-methylene-bis-p-chloroaniline.

(8) Polybutadiene compounds having hydroyxl groups at the terminals.

The reaction between the polyisocyanate compound and active hydrogen compound may be carried out in accordance with the *per se* known reaction conditions.

As the colloidal silica to be used in the present invention, there can be employed any type of commercially available ones, and their examples include Aerosil-200® and Aerosil-300®, R-812®, R-805®, RX-200®, RY-200®, R-972® (all of these are produced by Nippon Aerosil Co. of Japan), etc.

In the above formula (I), the group represented by $R^1$, $R^2$, $R^3$ and $R^4$ is a methyl or phenyl group, preferably a methyl group. m is an integer of 0 to 70, preferably 10 to 30.

With reference to the group having a polyoxyalkylene chain of the formula (i) as represented by X, $Y^1$, $Y^2$ and Z, n is 1 to 4, preferably 2 or 3, and a is 0 to 50, more preferably 0 to 10, while b is 10 to 100, preferably 20 to 50. The alkyl of 1 to 8 carbon atoms represented by $R^5$ includes, for example, methyl, ethyl, propyl, butyl and pentyl, preferably methyl. The alkylcarbonyl group of 1 to 18 carbon atoms represented likewise by $R^5$ includes acyl groups derived from saturated monocarboxylic acids of 1 to 18 carbon atoms, and the desirable examples are acetyl, propionyl and butyryl. When in the group represented by the formula (i), a is not less than 1, the individual oxypropylene group $-C_3H_6O-$ and oxyethylene group $-C_2H_4O-$ may be linked to each other in any orders, and it should be understood that the groups of the formula (i), irrespective of whether they may for example take the form of block copolymer or random copolymer containing such two unit groups, are to be included in the scope as defined above. It is desirable

that the polyoxyalkylene-chain containing group of the formula (i) as represented by X, $Y^1$, $T^2$ and Z is present in not less than at least 2 in the molecule of the polymer as represented by the general formula (I).

The polymer exhibits a molecular weight in the range of about 500 to 30,000. The proportion in which the polyoxyalkylene-chain containing group represented by the formula (i) occupies the polymer is favorably in the range of 30 to 95 weight %, more preferably in the range of 50 to 90 weight %.

The siloxane polymers having such polyoxyalkylene chains can be synthesized by the *per se* known methods, such as those as described in the Japanese Patent Publication No. 24731/1964 and the Japanese Unexamined Patent Publication No. 134098/1975.

The proportion in which colloidal silica is incorporated into the composition of the present invention is preferably 0.5 to 50 parts by weight against 100 parts of the polyurethane polymer, particularly preferably 1.0 to 20 parts by weight.

The ratio in which the polysiloxane·polyoxyalkylene polymer of the general formula (I) is utilized in the composition of the present invention is favorably 0.1 to 50 parts by weight against 100 parts of colloidal silica, more favorably 1 to 20 parts by weight.

If necessary, the composition of the present invention may be admixed and formulated with solvents, such as toluene, xylene, ethyl acetate, methyl ethyl ketone and ligroin, inorganic fillers, such as calcium carbonate, talc, clay, and silica, pigments, such as titanium oxide, phthalocyanine blue, iron oxide, chrome yellow, ultramarine blue and carbon, plasticisers to be used in urethanes, such as dioctyl phthalate, dioctyl adipate, tricresyl phosphate and liquid petroleum resins, antioxidants, UV absorbers and various kinds of catalysts for urethanes.

The thixotropy of the polyurethane resin composition to be obtained according to the present invention is in no way lowered even by the addition and milling of various solvents, plasticizers, inorganic fillers, pigments, UV absorbers, antioxidants and amine or organometallic catalysts conventionally used in the urethane industry. The resin composition according to the present invention, furthermore, can restore its thixotropy quickly after a high shear stress is applied to the said composition before use through milling in three-bar roll kneader, planetary mixer, disper, high-speed mixer, butterfly mixer, etc. conventionally employed for milling or through refilling and packing by use of packing machine, and is consequently an ideal thixotropic polyurethane resin composition.

## Example 1

By allowing 639 parts by weight of polyoxypropylene glycol with a molecular weight of 2000, 213 parts by weight of polyoxypropylene triol with a molecular weioght of 3000 and 148 parts by weight of a mixture of 2,4-tolylene diisocyanate and 2,6-tolylene diisocyanate (80:20) to react in a stream of nitrogen at 80°C for 6 hours, there was obtained a urethane prepolymer having an isocyanate group content of 3.56%. The prepolymer was called "urethane prepolymer (A)".

To 100 parts by weight of the urethane prepolymer (A) as obtained in the above were added 5 parts by weight of colloidal silica (tradename of Aerosil® 200, produced by Nippon Aerosil Co. of Japan) and 0.5 part by weight each of siloxane compounds A to H as described in Tables 1 and 2, followed by mixing with use of a vacuum kneader at 60°C for 1 hour to give grease-formed compositions, respectively. These compositions were allowed to stand one day, then stirred in a high-speed mixer (1000 rpm) for 2 minutes and subjected to the slump test in accordance with JIS A-5758, with the results being obtained as shown in Tables 1 and 2.

TABLE 1

| Polymer of the general formula (Ia) | | | | | | | |
|---|---|---|---|---|---|---|---|
| Designation of the specimen | p | q | n | a | b | $R^5$ | Slump (m/m) |
| A | 0 | 2 | 1 | 20 | 20 | H | 0 |
| B | 10 | 0 | 3 | 5 | 40 | H | 0 |
| C | 20 | 8 | 1 | 50 | 100 | $CH_3$ | 0 |
| D | 15 | 2 | 3 | 0 | 30 | $CH_3$ | 0 |
| E | 30 | 5 | 4 | 2 | 10 | $CH_3$ | 0 |
| F | 50 | 4 | 3 | 10 | 30 | $C_4H_9$ | 0 |
| G | 20 | 1 | 3 | 6 | 20 | $COCH_3$ | 0 |

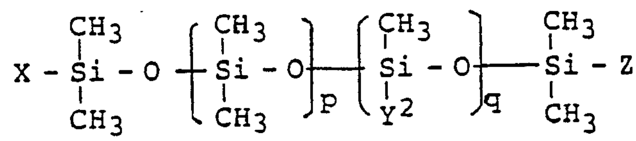

(Ia)

(wherein X, $Y^2$ and Z each is $-(CH_2)_n-O\{(C_3H_6O)_a(C_2H_4O)_b\}-R^5$)

TABLE 2:

| Polymer of the general formula (Ib) | | | | | | | Slump (m/m) |
|---|---|---|---|---|---|---|---|
| Designation of the specimen | p | q | n | a | b | $R^5$ | |
| H | 12 | 2 | 1 | 0 | 25 | $CH_3$ | 0 |

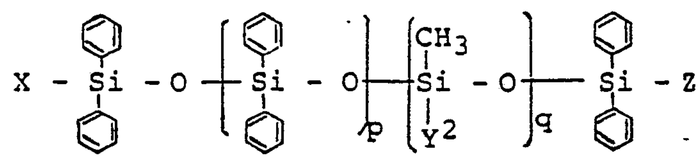

(Ib)

(wherein X, $Y^2$ and Z each is $-(CH_2)_n-O\{(C_3H_6O)_a(C_2H_4O)_b\}-R^5$

Example 2

By allowing 590 parts by weight of polyoxypropylene glycol with a molecular weight of 3000, 295 parts by weight of polyoxypropylene triol with a molecular weight of 4500 and 115 parts by weight of 4,4'-diphenylmethane diisocyanate to react in a stream of nitrogen at 80°C for 4 hours, there was obtained a prepolymer having an isocyanate group content of 1.38%. This prepolymer was called "urethane prepolymer (B)".

To 100 parts by weight of the prepolymer (B) as obtained in the above were added 60 parts by weight of dioctyl phthalate, 8 parts by weight of colloidal silica (tradename of Aerosil® 200, produced by Nippon Aerosil Co. of Japan) and 0.8 parts by weight of the siloxane compound represented by the formula (Ic), followed by mixing in a vacuum kneader at 60°C for 1 hour to give a grease-formed composition. The composition was allowed to stand one day, then stirred with a high-speed mixer (500 rpm) for 2 minutes and subjected to the slump test in accordance with JIS A-5758, with the result that the slump was 0 m/m.

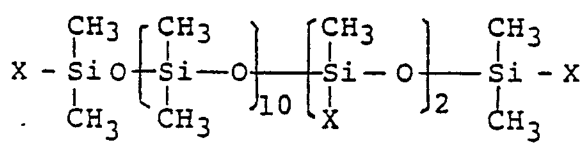

(Ic)

(wherein X is $-C_3H_6O(C_3H_6O)_5(C_2H_4O)_{30}-CH_3$).

Example 3

To 100 parts by weight of the prepolymer (B) as prepared in Example 2 were added 60 parts by weight of dioctyl adipate, 40 parts by weight of calcium carbonate (Eskaron® 200, produced by Sankyo Seifun Co. of Japan), 9 parts by weight of titanium oxide (R-820, produced by Ishihara Sangyo Kaisha Ltd. of Japan), 8 parts by weight of colloidal silica (Aerosil® 200, produced by Nippon Aerosil Co. of Japan) and 0.8 part by weight each of the compounds B and D as shown in Table 1, followed by stirring in a vacuum kneader at 60°C for 1 hour to give grease-formed compositions. The compositions were allowed to stand one day, then stirred with a high-speed mixer (800 rpm) for 2 minutes and subjected to the slump test in accordance with JIS A-5758, with the result that the slumps were 0 mm, respectively.

Reference Example 1

Using a polyoxyethylene glycol (with a molecular weight of 1,000) in place of the siloxane compound of the formula (Ic) employed in Example 2, an experiment was carried out, with the result that the slump was 15 mm.

Reference Example 2

Using the compounds represented by (II) in place of the siloxane compounds of the formula (Ia) in Example 1, experiments were conducted, and the results as shown in Table 3 were obtained.

TABLE 3

| Compound of the formula (III) | | | | | | | Slump (m/m) |
|---|---|---|---|---|---|---|---|
| Designation of the specimen | R | R′ | l | m | a | b | |
| H | $CH_3$ | $CH_3$ | 1 | 9 | 52 | 43 | 3 |
| I | $CH_3$ | $CH_3$ | 2 | 31 | 23 | 35 | 10 |
| J | $CH_3$ | $CH_3$ | 3 | 48 | 15 | 50 | 15 |
| K | $C_4H_9$ | $C_4H_9$ | 2 | 27 | 25 | 26 | 4 |

$$R_lSi[O(\underset{CH_3}{\overset{CH_3}{Si}}O)_m(C_2H_4O)_a(C_3H_6O)_bR']_{4-l} \qquad (II)$$

Reference Example 3

Using the compounds represented by (III) in place of the siloxane compounds of the formula (Ia) in Example 1, experiments were carried out, and the results as shown in Table 4 were obtained.

TABLE 4

| Designation of the specimen | Compound of the formula (III) | | | | | | | Slump m/m) |
|---|---|---|---|---|---|---|---|---|
| | R | R′ | m | n | x | a | b | |
| L | $CH_3$ | $CH_3$ | 5 | 2 | 0 | 51 | 12 | 23 |
| M | $CH_3$ | $CH_3$ | 35 | 13 | 3 | 25 | 32 | 10 |
| N | $CH_3$ | $CH_3$ | 62 | 34 | 3 | 14 | 50 | 12 |
| O | $CH_3$ | $C_4H_9$ | 10 | 5 | 1 | 88 | 28 | 5 |
| P | $C_4H_9$ | $CH_3$ | 43 | 10 | 3 | 22 | 44 | 33 |

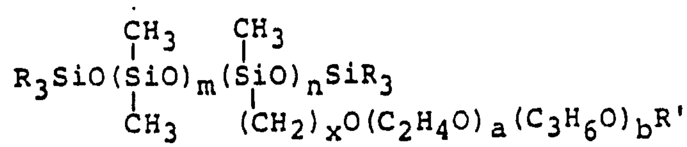

(III)

## Claims

1. A thixotropic polyurethane resin composition which comprises;
(1) A polyurethane prepolymer in the form of liquid or solution,
(2) Colloidal silica, and
(3) A polysiloxane·polyoxyalkylene polymer of the general formula:

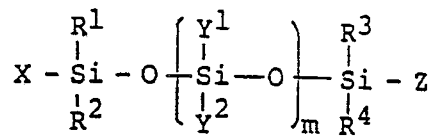 (I)

[wherein $R^1$, $R^2$, $R^3$ and $R^4$ are the same or different and each is a methyl or phenyl group; m is an integer of 0 to 70; one of X and Z is a polyoxyalkylene containing group represented by the formula:

$$-(CH_2)_n-O\{(C_3H_6O)_a(C_2H_4O)_b\}-R^5 \quad (i)$$

(wherein n is an integer of 1 to 4; a is an integer of 0 to 50; b is an integer of 10 to 100; $R^5$ is hydrogen, an alkyl group of 1 to 8 carbon atoms or an alkylcarbonyl group of 1 to 18 carbon atoms, and when a is an integer of not less than 1, the $C_3H_6O$ and $C_2H_4O$ groups may be linked to each other in arbitrary orders), and the other is methyl, phenyl or a polyoxyalkylene containing group represented by the formula (i); $Y^1$ and $Y^2$ are the same or different, and each is methyl, phenyl or a polyoxyalkylene containing group represented by the formula (i), whereby in the case of m being not less than 2, $Y^1$ and $Y^2$ may vary per repeating unit.

2. A composition according to Claim 1, wherein the proportion of the colloidal silica for every 100 parts by weight of the polyurethane prepolymer is 0.5—50 parts by weight and the proportion of the polysiloxane·polyoxyalkylene polymer of the formula (I) for every 100 parts by weight of the colloidal silica is 0.1 to 50 parts by weight.

3. A composition according to Claim 1, wherein the proportion of the colloidal silica for every 100 parts by weight of the polyurethane prepolymer is 1—20 parts by weight and the proportion of the polysiloxane·polyoxyalkylene polymer of the formula (I) for every 100 parts by weight of the colloidal silica is 1 to 20 parts by weight.

4. A composition according to Claim 1, wherein the proportion of the polyoxyalkylene-chain of the formula (i) to the whole polymer of the formula (I) is 30 to 95 weight percent.

5. A composition according to Claim 1, wherein the proportion of the polyoxyalkylene-chain of the formula (i) to the whole polymer of the formula (I) is 50 to 90 weight percent.

6. A composition according to Claim 1, wherein the molecular weight of the polymer of the formula (I) is 500 to 30,000.

## Patentansprüche

1. Thixotrope Polyurethan-Harz-Zusammensetzung, umfassend
(1) ein Polyurethan-Prepolymer in Form einer Flüssigkeit oder Lösung,
(2) kolloidales Siliciumdioxid und
(3) ein Polysiloxan-Polyoxyalkylen-Polymer der allgemeinen Formel

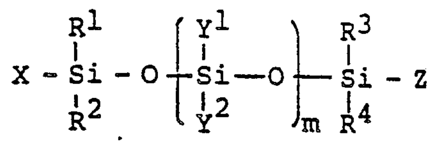 (I)

[in der $R^1$, $R^2$, $R^3$ und $R^4$ gleich oder verschieden und jeweils eine Methyl- oder Phenyl-Gruppe sind, m eine ganze Zahl von 0 bis 70 ist, einer der Substituenten X und Z eine Polyoxyalkylen enthaltende Gruppe ist, die durch die Formel

$$-(CH_2)_n-O\{(C_3H_6O)_a(C_2H_4O)_b\}-R^5 \quad (i)$$

bezeichnet wird (in der n eine ganze Zahl von 1 bis 4 ist, a eine ganze Zahl von 0 bis 50 ist, b eine ganze Zahl von 0 bis 100 ist, $R^5$ Wasserstoff, eine Alkyl-Gruppe mit 1 bis 8 Kohlenstoff-Atomen oder eine Alkylcarbonyl-Gruppe mit 1 bis 18 Kohlenstoff-Atomen ist, und wenn a eine ganze Zahl von nicht weniger als 1 ist, die $C_3H_6O$— und $C_2H_4O$-Gruppen in beliebiger Reihenfolge miteinander verknüpft sein können), und der andere Methyl, Phenyl oder eine durch die Formel (i) bezeichnete, Polyoxyalkylen enthaltende Gruppe ist, $Y^1$ und $Y^2$ gleich oder verschieden und jeweils Methyl, Phenyl oder eine durch die Formel (i) bezeichnete, Polyoxyalkylen enthaltende Gruppe sind, wobei in dem Fall, in dem m nicht kleiner als 2 ist, $Y^1$ und $Y^2$ pro Repetiereinheit variieren können.

2. Zusammensetzung nach Anspruch 1, worin der Anteil des kolloidalen Siliciumdioxids auf jeweils 100 Gew.-Teile des Polyurethan-Prepolymers 0,5 bis 50 Gew.-Teile beträgt und der Anteil des Polysiloxan-Polyoxyalkylen-Polymers der Formel (I) auf jeweils 100 Gew.-Teile des kolloidalen Siliciumdioxids 0,1 bis 50 Gew.-Teile beträgt.

3. Zusammensetzung nach Anspruch 1, worin der Anteil des kolloidalen Siliciumdioxids auf jeweils 100 Gew.-Teile des Polyurethan-Prepolymers 1 bis 20 Gew.-Teile beträgt und der Anteil des Polysiloxan-Polyoxyalkylen-Polymers der Formel (I) auf jeweils 100 Gew.-Teile des kolloidalen Siliciumdioxids 1 bis 20 Gew.-Teile beträgt.

4. Zusammensetzung nach Anspruch 1, worin der Anteil der Polyoxyalkylen-Kette der Formel (i) an dem gesamten Polymer der Formel (I) 30 bis 95 Gew.-% beträgt.

5. Zusammensetzung nach Anspruch 1, worin der Anteil der Polyoxyalkylen-Kette der Formel (i) an dem gesamten Polymer der Formel (I) 50 bis 90 Gew.-% beträgt.

6. Zusammensetzung nach Anspruch 1, worin das Molekulargewicht des Polymers der Formel (I) 500 bis 30 000 beträgt.

**Revendications**

1. Composition de résine polyuréthanne thixotrope comprenant:
(1) un prépolymère polyuréthanne sous forme de liquide ou de solution,
(2) de la silice colloïdale et
(3) un polymère polysiloxane-polyoxyalkylène de formule générale

$$X-\underset{R^2}{\overset{R^1}{\underset{|}{\overset{|}{Si}}}}-O\left[\underset{Y^2}{\overset{Y^1}{\underset{|}{\overset{|}{Si}}}}-O\right]_m\underset{R^4}{\overset{R^3}{\underset{|}{\overset{|}{Si}}}}-Z \qquad (I)$$

dans laquelle $R^1$, $R^2$, $R^3$ et $R^4$ sont identiques ou différents et sont chacun un groupe méthyle ou phényle; m est un nombre entier valant de 0 à 70; l'un des radicaux X et Z est un radical contenant un groupe polyoxyalkylène, représenté par la formule:

$$-(CH_2)_n-O-[(C_3H_6O)_a(C_2H_4O)_b]-R^5 \qquad (i)$$

(dans laquelle n est un nombre entier valant de 1 à 4; a est un nombre entier valant de 0 à 50; b est un nombre entier valant de 10 à 100; $R^5$ est un atome d'hydrogène ou un groupe alkyle ayant de 1 à 8 atomes de carbone ou un groupe alkyl-carbonyle ayant de 1 à 18 atomes de carbone, et lorsque a est un nombre entier valant au moins 1, les groupes $C_3H_6O$ et $C_2H_4O$ peuvent être liés l'un à l'autre en un ordre quelconque),
et l'autre est un radical méthyle, un radical phényle ou un radical contenant un groupe polyoxyalkylène représenté par la formule (i); $Y^1$ et $Y^2$ sont identiques ou différents, et sont chacun un radical méthyle, un radical phényle ou un radical contenant un groupe polyoxyalkylène représenté par la formule (i), $Y^1$ et $Y^2$ pouvant, dans le cas où m est au moins égal à 2, varier d'un motif répétitif à l'autre.

2. Composition selon la revendication 1, dans laquelle la proportion de la silice colloïdale, pour 100 parties en poids du prépolymère polyuréthanne, est de 0,5 à 50 parties en poids et la proportion du polymère polysiloxane-polyoxyalkylène de formule (I), pour 100 parties en poids de la silice colloïdale, est de 0,1 à 50 parties en poids.

3. Composition selon la revendication 1, dans laquelle la proportion de la silice colloïdale, pour 100 parties en poids du prépolymère polyuréthanne, est de 1 à 20 parties en poids et la proportion du polymère polysiloxane-polyoxyalkylène de formule (I), pour 100 parties en poids de la silice colloïdale, est de 1 à 20 parties en poids.

4. Composition selon la revendication 1, dans laquelle la proportion de la chaîne polyoxyalkylène de formule (i) par rapport au polymère total de formule (I) est de 30 à 95% en poids.

5. Composition selon la revendication 1, dans laquelle la proportion de la chaîne polyoxyalkylène de

formule (i) par rapport au polymère total de formule (I) est de 50 à 90% en poids.

6. Composition selon la revendication 1, dans laquelle la masse moléculaire du polymère de formule (I) est de 500 à 30 000.